**Europäisches Patentamt**

(19) **European Patent Office** (11) Numéro de publication: **0 324 290**

**Office européen des brevets** **B1**

(12) **FASCICULE DE BREVET EUROPEEN**

(45) Date de publication du fascicule du brevet: **30.01.91** (51) Int. Cl.⁵: **F 16 G 3/02**

(21) Numéro de dépôt: **88403013.1**

(22) Date de dépôt: **30.11.88**

(54) **Axe de jonction pour l'accouplement des extrémités d'un tapis transporteur ou similaire.**

(30) Priorité: **17.12.87 FR 8717618**

(43) Date de publication de la demande:
**19.07.89 Bulletin 89/29**

(45) Mention de la délivrance du brevet:
**30.01.91 Bulletin 91/05**

(84) Etats contractants désignés:
**DE ES GB**

(56) Documents cités:
**DE-C- 926 645**
**FR-A- 720 857**
**FR-A-2 196 683**
**FR-A-2 301 738**
**FR-A-2 574 510**
**US-A-2 962 782**
**US-A-4 597 137**

(73) Titulaire: **GORO S.A.**
**Avenue de Sylvie**
**F-77500 Chelles (FR)**

(72) Inventeur: **Schick, Jean-François**
**75, rue de l'Assomption**
**F-75016 Paris (FR)**

(74) Mandataire: **Tony-Durand, Serge**
**Cabinet Tony-Durand 77, rue Boissière**
**F-75116 Paris (FR)**

Courier Press, Leamington Spa, England.

**Description**

La présente invention concerne les dispositifs utilisés pour assurer la jonction de deux parties successives d'un tapis transporteur.

Une telle jonction est habituellement réalisée en rapportant, sur l'extrémité des deux parties à raccorder, deux séries complémentaires d'agrafes métalliques de jonction et en réunissant ensuite celles-ci au moyen d'un axe enfilé à travers l'ensemble des charnons imbriqués de ces agrafes. L'axe de jonction utilisé à cet effet doit être flexible afin de permettre au tapis transporteur correspondant de s'incurver dans le sens transversal pour prendre une forme d'auge sur les rouleaux qui lui servent de supports.

En conséquence cet axe de jonction est en général constitué par un câble formé de fils métalliques torsadés. Toutefois la résistance mécanique à l'usure d'un tel axe est relativement limitée.

Or au cours des dernières années, un certain nombre de solutions très efficaces ont été imaginées pour assurer le renforcement de la résistance mécanique des charnons d'articulation des agrafes de jonction, lesquels constituaient auparavant la partie faible des dispositifs de jonction ainsi constitués. En conséquence c'est désormais l'axe de jonction lui-même qui est la partie faible de l'ensemble. En effet le frottement des charnons des agrafes sur la périphérie d'un tel axe provoque très rapidement la rupture de l'un ou l'autre des fils métalliques torsadés et à partir de ce moment l'axe correspondant est très rapidement hors d'usage.

Par ailleurs dès que l'un des fils torsadés est rompu, les extrémités des deux tronçons, qui en résultent, tendent à se détacher des autres fils et à se déployer en interdisant pratiquement toute possibilité de démontage de l'axe correspondant. Or lorsqu'il s'agit de dispositifs de jonction utilisés sur des tapis transporteurs équipant une mine d'extraction de charbon, il est nécessaire de démonter fréquemment les dispositifs de jonction pour rallonger les tapis transporteurs en leur adjoignant une bande supplémentaire. Lorsque l'axe d'un dispositif de jonction ne peut pas être démonté, ceci oblige à couper les extrémités du tapis de part et d'autre et à rapporter sur celles-ci de nouvelles agrafes de jonction, sans possibilité de récupérer les anciennes agrafes.

Pour remédier à ces inconvénients, un certain nombre de solutions ont déjà été proposées mais aucune n'est satisfaisante. Ainsi le brevet US 2.962.782 et le brevet français 720.857 décrivent des axes constitués par, un câble en fils métalliques torsadés sur lequel est rapportée une gaine externe de protection en matière flexible. Cependant cette solution assure simplement la protection de l'axe correspondant, mais non pas le renforcement de sa résistance mécanique.

Quant aux brevets allemands 926.645, 2.240.013 (FR-A-2196683) et 2.507.474 (FR-A-2301738), ils décrivent des axes constitués par un câble formé de fils métalliques torsadés et sur lesquels sont enfilées une série de douilles métalliques, disposées les uns à la suite des autres. Une solution de ce genre est meilleure que la précédente car les douilles métalliques ainsi prévues présentent une plus grande résistance mécanique qu'une simple gaine de protection en matière flexible.

Toutefois cette solution reste imparfaite. En effet comme la présence des douilles de recouvrement entraîne une réduction de la section du câble axial, celui-ci présente une résistance insuffisante à l'allongement. Or dès que ce câble subit un allongement sous l'effet des sollicitations s'exerçant sur lui, il en résulte une possibilité de jeu entre des douilles de recouvrement. Ceci entraîne la mise à nu du câble axial entre deux douilles successives, et par suite une détérioration rapide de celui-ci se matérialisant par la rupture d'un ou plusieurs fils torsadés de la périphérie.

Dès qu'une telle rupture se produit, ceci interdit le démontage de l'axe. Or pour les raisons déjà exposées précédemment un tel démontage est indispensable pour pouvoir procéder périodiquement au montage d'une bande d'allongement du tapis transporteur, lorsque celui-ci est utilisé dans une mine à charbon.

Par ailleurs en cas de rupture complète du câble en un point intermédiaire de sa longueur, il est impossible d'extraire les éléments constitutifs de celui-ci pour pouvoir mettre en place un nouvel axe de jonction. En effet, comme les douilles métalliques sont indépendantes les unes des autres, le retrait de l'un et l'autre des deux tronçons de câble ne permet pas d'extraire, avec chacun d'eux, les douilles qui se trouvaient placées sur ces deux tronçons. De ce fait la réparation du dispositif de jonction nécessite un certain nombre d'opérations relativement compliquées pour pouvoir extraire tous les éléments de l'axe détérioré afin de pouvoir mettre en place un axe neuf.

Du reste en raison de ces divers inconvénients cette solution n'a pas été industriellement appliquée.

La présente invention a donc pour but de réaliser un axe de jonction du type en cause dont la résistance mécanique est renforcée de façon optimum et dont tous les éléments constitutifs peuvent néanmoins être extraits très facilement en cas de détérioration pour pouvoir remplacer immédiatement un tel axe par un axe neuf.

A cet effet l'axe de jonction selon l'invention est constitué par une série d'éléments métalliques rapportés, les uns à la suite des autres, autour d'une âme axiale flexible, et cet axe est caractérisé en ce que:

chacun de ces éléments affecte la forme d'un batonnet semi-cylindrique portant, à chaque extrémité, deux oreilles qui font saillie par rapport au plan diamétral délimitant l'élément correspondant, et auprès desquelles il est prévu une cavité (9, 9c) apte à servir de logement aux oreilles saillantes d'un élément identique placé sur l'élément considéré,

et ces éléments sont disposés, de part et d'autre de l'âme flexible, selon deux rangées inversées, avec un décalage d'une rangée à l'autre de façon que chaque élément d'une rangée déterminée se trouve placé pour partie en regard de l'une des moitiés d'un élément de l'autre rangée, et pour partie en face de l'une des moitiés d'un autre élément adjacent de cette autre rangée,

les oreilles saillantes de l'une et l'autre extrémités de chaque élément étant engagées dans les cavités correspondantes des éléments en regard de l'autre rangée, de sorte qu'il existe ainsi, dans le sens transversal, un accrochage des différents éléments disposés les uns à la suite des autres, avec une possibilité de débattement limité de ces éléments dans les autres directions permettant ainsi la flexibilité voulue de l'axe de jonction.

Cet axe présente une résistance mécanique extrêmement importante car les éléments répartis sur son âme flexible sont massifs et peuvent être réalisés en un métal très résistant, par exemple en acier inoxydable ou en acier trempé traité qui ne serait pas utilisable pour réaliser les fils torsadés d'un câble de jonction. Cependant du fait de l'agencement particulier de ces éléments et de leur accrochage les uns à la suite des autres, ceux-ci forment un ensemble d'un seul tenant qui peut être aisément extrait hors des charnons des agrafes de jonction, et ce même si l'âme flexible a disparu entre temps à l'usage. A ce sujet il convient de noter qu'aucun rôle n'est dévolu à cette âme en ce qui concerne la résistance mécanique de l'ensemble, car elle est simplement prévue pour permettre l'assemblage initial des éléments en forme de gouttière les uns à la suite des autres.

Cependant d'autres particularités et avantages de l'axe de jonction selon l'invention apparaîtront au cours de la description suivante. Celle-ci est donnée en référence au dessin annexé à simple titre indicatif, et sur lequel:

La figure 1 est une vue en coupe et en perspective d'un dispositif d'accouplement comportant un axe de jonction selon l'invention.

La figure 2 est une vue en perspective de l'un des éléments constitutifs de cet axe.

Les figures 3 et 4 en sont des vues respectivement en élévation de côté en en plan de dessus, à échelle différente.

La figure 5 est une vue partielle en élévation de côté, avec arrachement d'un axe constitué au moyen de tels éléments.

La figure 6 est une vue en coupe transversale, selon la ligne VI-VI, mais à échelle différente.

La figure 7 est une vue partielle en élévation illustrant l'une des possibilités d'incurvement du présent axe.

La figure 8 est une vue en plan de dessus d'une autre forme de réalisation des éléments constitutifs de l'axe de jonction selon l'invention.

La figure 9 en est une vue en coupe selon la ligne IX-IX de la figure 8.

La figure 10 en est une vue en coupe selon la ligne X-X de la figure 9.

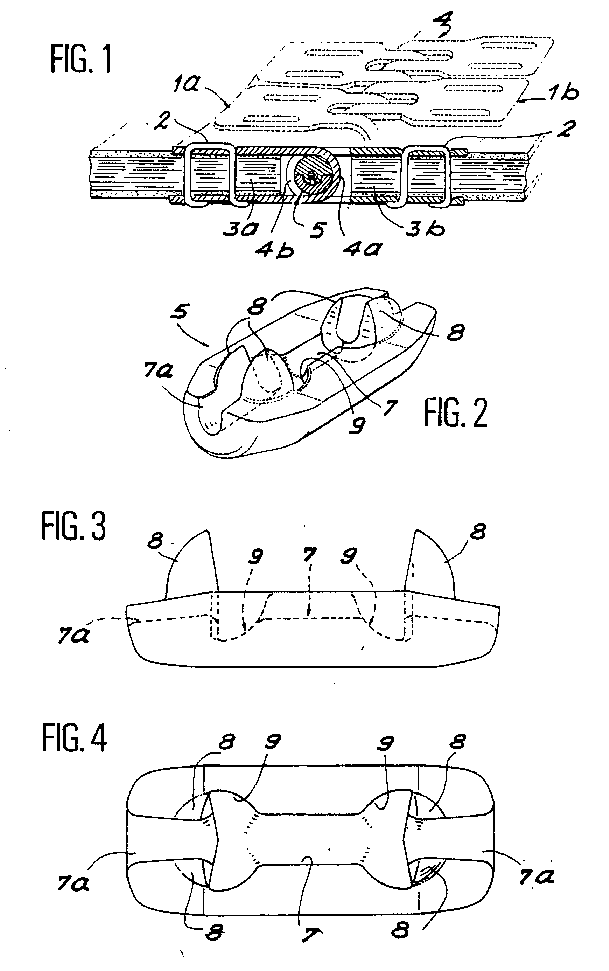

Ainsi qu'il a déjà été indiqué l'axe de jonction selon l'invention est destiné à assurer l'accouplement de deux rangées complémentaires d'agrafes métalliques de jonction 1a et 1b fixées, au moyen de crampons 2 en fils métalliques, sur les extrémités 3a et 3b d'un tapis transporteur. Plus précisément cet axe de jonction est destiné à être enfilé dans le conduit formé par les charnons 4a et 4b de ces agrafes lorsque ceux-ci sont imbriqués les uns dans les autres comme représenté sur la figure 1.

Le présent axe de jonction est constitué par une série d'éléments métalliques 5 rapportés les uns à la suite des autres autour d'une ame flexible 6. Etant donné qu'aucun rôle n'est dévolu à celle-ci en ce qui concerne la résistance mécanique du présent axe, cette âme peut être constituée par un câble métallique torsadé de très faible section, ou même par un fil mono-filament en résine synthétique ou toute autre matière appropriée.

Chacun des éléments métalliques rapportés sur cette âme affecte en quelque sorte la forme d'un batonnet massif de forme semi-cylindrique (voir figure 2). En retrait par rapport à chaque extrémité, il est prévu deux oreilles saillantes 8 disposées l'une en regard de l'autre et qui ménagent entre elles un passage pour l'ame flexible 6. Ces oreilles font saillie à angle droit par rapport au plan diamétral délimitant l'élément correspondant.

Cependant ces oreilles présentent une forme arrondie, correspondant par exemple à un tronçon de sphère, pour faciliter les mouvements de débattement des éléments 5 les uns à la suite des autres, comme il sera expliqué par la suite. A côté de chaque paire d'oreilles saillantes 8, chaque élément 5 comporte une cavité 9 de contour incurvé similaire, qui est destinée à recevoir les oreilles 8 d'un autre élément identique placé dessus en position inversé avec un décalage dans le sens axial.

Entre les deux cavités 9, il est prévu une rainure axiale 7 destinée à servir de logement à l'âme flexible, le passage prévu pour celle-ci s'étendant sur toute la longueur de chaque élément 5 dont les extrémités comportent des encoches correspondantes 7a. Ainsi chaque élément affecte en quelque sorte la forme d'un tronçon de gouttière.

Les éléments ainsi prévus ont une faible longueur, par exemple de l'ordre de 10 à 20 mm pour un rayon d'environ 3 mm, l'ame flexible ayant pour sa part un diamètre de l'ordre de 1 à 2 mm. Cependant ces valeurs de dimension ne sont citées qu'à titre d'exemple.

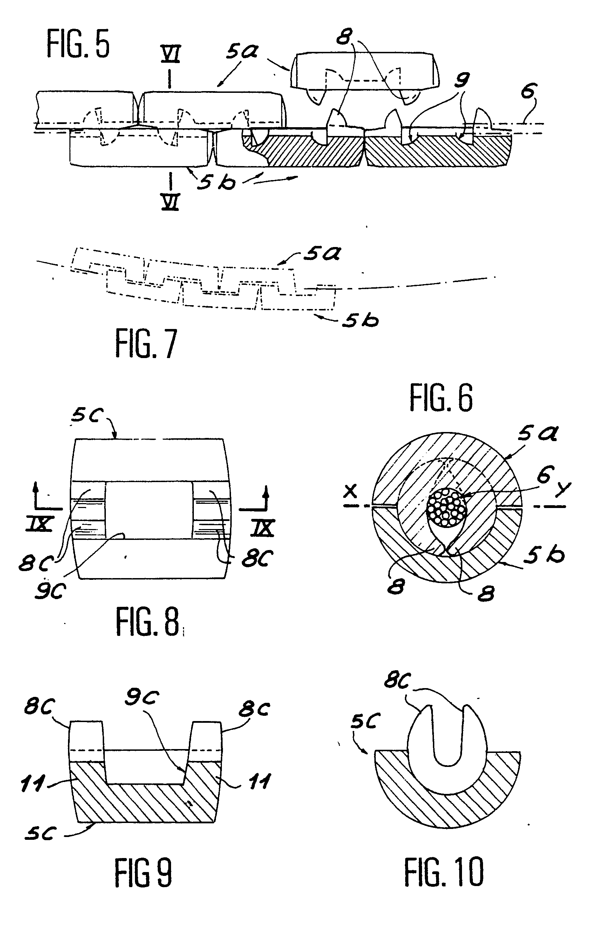

Comme représenté sur les figures 5 et 6, ces éléments sont disposés, de part et d'autre de l'ame flexible 6, selon deux rangées inversées avec un décalage d'un rangée à l'autre. Pour les différencier, les éléments de l'une des rangées sont désignés par la référence 5a, cependant que ceux de l'autre rangée portent la référence 5b. Le décalage entre les deux rangées est tel que chaque élément d'une rangée déterminée se trouve placé pour partie en regard de l'une des moitiés d'un élément 5 de l'autre rangée, et pour partie en face de l'une des moitiées d'un autre élément adjacent 5 de cette autre rangée.

Lors de l'assemblage de ces éléments, les oreilles saillantes 8 des éléments 5a de la rangée correspondante sont amenées à pénétrer dans les cavités 9 des éléments en regard 5b de l'autre rangée, et vice versa. Or les dimensions sont telles que cette pénétration doit être réalisée à force, ce qui provoque le recourbement l'une vers l'autre des extrémités des deux oreilles 8 de chaque paire. Ceci assure le sertissage de ces oreilles autour de l'ame flexible 6, comme représenté sur la figure 6.

Compte tenu que les oreilles 8 de chaque élément 5a sont engagées dans les cavités 9 des deux éléments successifs 5b en regard duquel cet élément 5a se trouve placé et qu'il en est de même pour chaque élément 5b, il existe un accrochage des éléments des deux rangées les uns à la suite des autre dans le sens axial. Ainsi ces éléments constituent un ensemble d'un seul tenant, et ce même en cas de disparition ultérieure de l'ame flexible 6.

Toutefois les éléments 5a et 5b possèdent une certaine liberté de débattement les uns par rapport aux autres dans toutes les directions, autres que le sens axial. Ainsi, comme représenté sur la figure 7, ces éléments peuvent légèrement se débattre par rapport au plan diamétral X-Y de superposition des deux rangées. Cependant ils peuvent aussi se débattre légèrement par rapport au plan axial perpendiculaire à celui-ci. Bien entendu ils peuvent également effectuer tout autre mouvement complexe de débattement. Cette possibilité de débattement des éléments 5 les uns par rapport aux autres assure donc la flexibilité voulue de l'axe ainsi constitué pour que le tapis transporteur correspondant puisse s'incurver en forme d'auge sur les rouleaux qui lui servent de supports.

Du reste, la forme particulière des oreilles saillantes 8 d'accrochage et des cavités 9 de réception de celles-ci facilite les mouvements de débattement des éléments 5a et 5b les uns par rapport aux autres. En effet grâce à cette forme particulière les oreilles 8 peuvent s'articuler en tous sens à l'intérieur des cavités 9.

La fabrication industrielle du présent axe de jonction ne soulève aucun problème particulier puis qu'il suffit s'assurer l'assemblage des deux rangées antagonistes d'éléments 5a et 5b de part et d'autre de l'ame flexible 6 en respectant le décalage voulu. Bien entendu à l'une et l'autre extrémités de l'axe, il convient de mettre en place un élément 5 de type particulier présentant une longueur réduite de moitié, ou une pièce particulière d'extrémité.

Il convient de noter que la flexibilité du présent axe est assurée uniquement par la possibilité de débattement des divers éléments 5 les uns par rapport aux autres. En conséquence il n'est pas nécessaire de prévoir une flexibilité propre de ces éléments eux-mêmes, ce qui ne permettrait pas de les réaliser sous une forme massive et en métal très résistant.

Or, du fait que les éléments 5 sont réalisés en métal très résistant, le présent axe de jonction possède une résistance mécanique élevée lui permettant de résister de façon efficace à l'usure provoquée par les frottements répétés des charnons 4a et 4b des agrafes de jonction correspondantes 1a et 1b. En conséquence la durée possible d'utilisation de cet axe est beaucoup plus élevée que celle des axes actuellement employés pour l'accouplement d'agrafes de jonction. Néanmoins en cas de détérioration de cet axe, il est possible de le retirer très facilement, même s'il a été rompu en un point intermédiaire de sa longueur. En effet comme tous les éléments 5a et 5b sont accrochés les uns à la suite des autres, il est possible d'extraire l'ensemble de ceux-ci par traction sur les éléments situés aux extrémités de l'axe, et ce même si l'ame flexible 6 n'existe plus.

L'accrochage des éléments 5 les uns à la suite des autres a également pour avantage important que pendant la durée d'utilisation du présent axe de jonction, il ne peut pas se produire un écartement de deux éléments successifs sous l'effet de la pression exercée par les charnons 4a et 4b des agrafes de jonction, et par suite une détérioration du présent axe.

Dans l'exemple représenté aux figures 1 à 7, le présent axe est fabriqué par estampage, ce qui permet de réaliser les formes particulières prévues sur ces figures pour les oreilles 8 et les cavités 9. Cependant comme représenté aux figures 8 à 10, ces éléments pourraient également être fabriqués en tôle découpée et repliée. Dans un tel cas, les oreilles saillantes 8c de chacun des éléments correspondants 5c seraient situées aux extrémités même de cet élément au-dessus d'un rebord terminal 11. Lors de l'assemblage de ces éléments sous forme de deux rangées antagonistes, il convient de respecter le même décalage que précédemment afin que les oreilles saillantes 8c de chaque élément viennent se loger à l'intérieur de la cavité 9c de l'élément placé en regard. De même que dans le cas précédent, les dimensions des différentes parties sont telles que cet assemblage à force provoque le sertissage des extrémités des oreilles 8c autour de l'ame flexible 6 de jonction correspondante.

Comme précédemment il existe un accrochage de tous les éléments 5c les uns à la suite des autres, puisque les oreilles 8c sont retenues par les rebords 11 d'extrémité.

Cependant il y a également une possibilité de léger débattement dans toutes directions, autres que le sens axial. Ceci permet donc d'obtenir un axe possédant une très grande résistance mécanique, mais qui présente néanmoins la flexibilité nécessaire pour autoriser l'incurvement ultérieur du tapis transporteur correspondant.

Cependant de nombreuses autres variantes peuvent être envisagées pour la réalisation du présent axe de jonction. Comme déjà indiqué celui-ci est destiné à être utilisé pour l'accouplement de deux rangées complémentaires d'agrafes de jonction préalablement rapportées sur les extrémités d'un tapis transporteur ou similaires.

En raison de sa très grande résistance mécanique le présent axe de jonction présente une durée d'utilisation beaucoup plus longue que les axes utilisés jusqu'ici pour la même application. De plus il est susceptible d'être utilisé, sans inconvénient, dans des milieux très abrasifs.

**Revendications**

1. Axe de jonction destiné à assuer l'accouplement de deux rangées d'agrafes de jonction (1a, 1b) rapportées sur les extrémités (3a, 3b) à réunir d'un tapis transporteur ou similaire, cet axe étant constitué par une série d'éléments métalliques (5) rapportés, les uns à la suite des autres autour d'une âme axiale flexible (6), caractérisé en ce que:

chacun de ces éléments (5, 5c) affecte la forme d'un batonnet semi-cylindrique portant, à chaque extrémité, deux oreilles (8, 8c) qui font saillie par rapport au plan diamétral délimitant l'élément correspondant, et auprès desquelles il est prévu une cavité (9, 9c) apte à servir de logement aux oreilles saillantes d'un élément identique placé sur l'élément considéré,

et ces éléments (5, 5c) sont disposés, de part et d'autre de l'âme flexible (6), selon deux rangées inversées, avec un décalage d'une rangée à l'autre, de façon que chaque élément (5, 5c) d'une rangée déterminée se trouve placé pour partie en regard de l'une des moitiés d'un élément (5, 5c) de l'autre rangée, et pour partie en face de l'une des moitiés d'un autre élément adjacent (5, 5c) de cette autre rangée,

les oreilles saillantes (8, 8c) de l'une et l'autre extrémités de chaque élément étant engagées dans les cavités correspondantes (9, 9c) des éléments en regard de l'autre rangée, de sorte qu'il existe ainsi, dans le sens axial, un accrochage des différents éléments (5, 5c) disposés les uns à la suite des autres, avec une possibilité de débattement limité de ces éléments dans les autres directions permettant ainsi la flexibilité voulue de l'axe de jonction.

2. Axe de jonction selon la revendication 1, caractérisé en ce que les oreilles saillantes (8, 8c) de chaque élément (5, 5c) en forme de gouttière sont initialement perpendiculaires au plan diamétral délimitant cet élément, et après assemblage de chaque élément avec les deux éléments respectifs de l'autre rangée, les oreilles de cet élément sont serties autour de l'ame flexible (6) du fait de leur pénétration à force à l'intérieur des cavités (9, 9c) de ces éléments.

3. Axe de jonction selon l'une des revendications précédentes, caractérisé en ce que les oreilles saillantes (8) des extrémités de chaque élément (5) en forme de gouttière sont disposées légèrement en retrait par rapport à l'extrémité correspondante qui comporte une cloison transversale (6) de façon à assurer la retenue, dans le sens axial, des oreilles saillantes de l'élément correspondant de l'autre rangée.

4. Axe de jonction selon l'une des revendications précédentes, caractérisé en ce que les oreilles saillantes (8) des éléments (5) en forme de gouttière ainsi que les cavités (9) de réception de celles-ci ont un profil facilitant le débattement de ces éléments les uns par rapport aux autres dans toutes directions, autres que le sens axial.

**Patentansprüche**

1. Kupplungsstab zum Verbinden der beiden Bereiche von Verbindungsklammern (1a, 1b), die auf die Enden (3a, 3b) eines Transportbandes oder dgl. aufgesetzt sind, wobei der Kupplungsstab aus einer Vielzahl aneinander angesetzter metallischer Elemente (5) besteht, die nacheinander um eine sich axial erstreckende Seele aus flexiblem Material angeordnet sind, dadurch gekennzeichnet,

daß jedes dieser Elemente (5, 5c) eine stabartige halbzylindrische Form aufweist und in jedem Endbereich zwei Zungen (8, 8c) trägt, die aus einer das jeweilige Element begrenzenden Ebene vorspringend angeordnet sind und neben denen eine Vertiefung (9, 9c) zur Aufnahme der vorstehenden Zungen eines identischen auf das betrachtete Element aufgesetzten Elementes vorgesehen ist,

daß diese Elemente (5, 5c) beidseitig auf die flexible Seele (6) in zwei Reihen mit einem derartigen Versatz der einen Reihe zur anderen, daß jedes Element (5, 5c) einer bestimmten Reihe mit seinem betreffenden Teil einer Hälfte eines Elementes (5, 5c) der anderen Reihe zugekehrt angeordnet ist, aufgesetzt sind, wobei sich der gegenüberliegende Teil des Elementes auf einer Hälfte eines anderen benachbarten Elementes (5, 5c) der anderen Reihe abstützt,

und daß die vorstehenden Zungen (8, 8c) am einen und anderen Endbereich jedes Elementes in die entsprechenden Vertiefungen (9, 9c) an Elementen der anderen Reihe unter axialer Verhakung der aufeinanderfolgend angeordneten Elemente (5, 5c) eingreifen, wobei sich eine begrenzte Beweglichkeit der Elemente in den anderen Richtungen ergibt, die auch die gewünschte Flexibilität des Kupplungsstabes erbringt.

2. Kupplungsstab nach Anspruch 1, dadurch gekennzeichnet, daß die vorstehenden Zungen (8, 8c) jedes rinnenförmigen Elementes (5, 5c) zunächst senkrecht zu der das jeweilige Element begrenzenden Ebene angeordnet sind und daß nach der Verbindung jedes Elementes mit zwei entsprechenden Elementen der anderen Reihe die Zungen des Elementes um die flexible Seele (6) so eingesetzt sind, daß sie unter Spannung in den Innenraum der Vertiefungen (9, 9c) der Elemente eintreten.

3. Kupplungsstab nach einem der vorangehenden Ansprüche 1 oder 2, dadurch gekennzeichnet, daß die vorstehenden Zungen (8) der Endbereiche jedes rinnenförmigen Elementes (5) zu den korrespondierenden Endbereichen mit leichter Verjüngung vorgesehen sind, so daß eine Querwand (6) zur Sicherung des axialen Zusammenhalts der vorstehenden Zungen des korrespondierenden Elementes der anderen Reihe gebildet ist.

4. Kupplungsstab nach einem der vorangehenden Ansprüche 1 bis 3, dadurch gekennzeichnet, daß die vorstehenden Zungen (8) der rinnenförmigen Elemente wie auch die Vertiefungen (9) zu ihrer Aufnahme eine die gegenseitige Bewegung der Elemente in allen Richtungen außer in axialer Richtung gestaltende Form aufweisen.

**Claims**

1. A junction axis intended for coupling together two rows of junction clips (1a, 1b) attached to the ends (3a, 3b) of a conveyor belt or the like, which are to e joined, this axis being formed of a series of metal elements (5) mounted behind each other around a flexible axial core (6), characterized in that:

each of these elements (5, 5c) is in the form of a short semi-cylindrical rod carrying on each end two lugs (8, 8c) which protrude from the diametral plane defining the corresponding element, a recess (9, 9c) being provided near said lugs and being adapted for serving as a socket for the salient lugs of another identical element placed over the element being considered;

these elements (5, 5c) are disposed on either side of the flexible core (6) in two inverted rows, with an offset spacing from one row to the other, in such manner that each element (5, 5c) of one given row is placed partly facing one of the halves of an element (5, 5c) of the other row, and partly facing one of the halves of another adjacent element (5, 5c) of this other row;

the salient lugs (8, 8c) of both ends of each element are engaged inside the corresponding recesses (9, 9c) of the facing elements of the other row, so that there thus exists, in the axial direction, a hitching of the various elements (5, 5c) disposed in succession, with a limited possibility of movement of these elements in the other directions, thus providing the required flexibility of the junction axis.

2. A junction axis according to Claim 1, characterized in that the salient lugs (8, 8c) of each channel-shaped element (5, 5c) are initially perpendicular to the diametral plane defining this element, and after assembling each element with the two respective elements of the other row, the lugs of this element are crimped around the flexible core (6), due to their forcible penetration inside the recesses (9, 9c) of these elements.

3. A junction axis according to one of the above Claims, characterized in that the salient lugs (8) of the ends of each channel-shaped element (5) are slightly set back from the corresponding end which includes a transversal wall (11) so as to retain, along the axial direction, the salient lugs of the corresponding element of the other row.

4. A junction axis according to one of the preceding Claims, characterized in that the salient lugs (8) of the channel-shaped elements (5) as well as the recesses (9) provided for receiving these lugs have a profile which facilitates the movements of these elements relative to each other in all directions other than the axial direction.

FIG. 1

FIG. 2

FIG. 3

FIG. 4

FIG. 5

FIG. 7

FIG. 6

FIG. 8

FIG 9

FIG. 10